(19) Europäisches Patentamt
European Patent Office
Office européen des brevets

(11) Veröffentlichungsnummer : **0 361 131 B1**

# (12) EUROPÄISCHE PATENTSCHRIFT

(45) Veröffentlichungstag der Patentschrift :
**20.01.93 Patentblatt 93/03**

(51) Int. Cl.[5] : **C08L 81/06,** // (C08L81/06, 9:02)

(21) Anmeldenummer : **89116257.0**

(22) Anmeldetag : **02.09.89**

## (54) Thermoplastische Formmassen aus aromatischem Polyethersulfon und hydriertem Nitrilkautschuk.

(30) Priorität : **15.09.88 DE 3831373**

(43) Veröffentlichungstag der Anmeldung :
**04.04.90 Patentblatt 90/14**

(45) Bekanntmachung des Hinweises auf die Patenterteilung :
**20.01.93 Patentblatt 93/03**

(84) Benannte Vertragsstaaten :
**DE FR GB IT NL**

(56) Entgegenhaltungen :
**DE-A- 3 634 882**
**DE-B- 1 794 171**
**DATABASE WPIL, no. 87-233 039 DERWENT PUBLICATIONS LTD., London, GB**

(73) Patentinhaber : **BAYER AG**
**W-5090 Leverkusen 1 Bayerwerk (DE)**

(72) Erfinder : **Eichenauer, Herbert, Dr.**
**Gustav Heinemann-Strasse 3**
**W-4047 Dormagen 1 (DE)**
Erfinder : **Buding, Hartmuth, Dr.**
**Liebermannstrasse 1**
**W-4047 Dormagen 1 (DE)**
Erfinder : **Eckel, Thomas, Dr.**
**Gneisenaustr. 15a**
**W-4047 Dormagen 1 (DE)**
Erfinder : **Ott, Karl-Heinz, Dr.**
**Paul Klee-Strasse 54**
**W-5090 Leverkusen 1 (DE)**

EP 0 361 131 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aromatische Polyethersulfone zeichnen sich durch eine sehr gute Wärmeformbeständigkeit aus; Zähigkeit und thermoplastische Verabeitbarkeit sind weniger zufriedenstellend. Die mehrfach (DE-AS 1 794 171, DE-OS 3 601 419, DE-OS 3 601 420) beschriebene Zähigkeitserhöhung durch Zusatz bestimmter Pfropfkautschuke bewirkt in der Regel keine oder nur eine geringe Verbesserung der Verarbeitbarkeit, aber oft eine Verschlechterung der Witterungsbeständigkeit.

Es wurde gefunden, daß Mischungen aus thermoplastischen aromatischen Polyethersulfonen und hydrierten Nitrilkautschuken gute Zähigkeiten, sehr gute thermoplastische Verarbeitbarkeit und gute Witterungsstabilität aufweisen.

Gegenstand der vorliegenden Erfindung sind thermoplastische Formmassen aus

A) 70 bis 99,5 Gew.-%, vorzugsweise 75 bis 97,5 Gew.-%, eines thermoplastischen aromatischen Polyethersulfons oder Mischungen mehrerer thermoplastischer Polyethersulfone und

B) 30 bis 0,5 Gew.-%, vorzugsweise 25 bis 2,5 Gew.-%, eines hydrierten Nitrilkautschuks mit einem Hydriemingsgrad von mindestens 80%, der durch Hydrieren eines statischischen copolymerisat erhalten würde.

Aromatische Polyethersulfone (A) im Sinne der Erfindung lassen sich als lineare, thermoplastische Polyarylenpolyetherpolysulfone beschreiben, in welchen die Aryleneinheiten von Ether- und Sulfonbindungen unterbrochen sind. Diese Harze erhält man durch Umsetzung eines Alkalimetalldoppelsalzes eines zweiwertigen Phenols (Bisphenols) mit einer zwei Halogenatome aufweisenden benzoiden Verbindung, wobei entweder eine oder beide Verbindung(en) die zum Einbau von Sulfoneinheiten in die Arylen- und Ethereinheiten aufweisende Polymerenkette notwendige Sulfonbindung ($-SO_2-$) besitzt. Die Polyethersulfone sowie deren Herstellung sind literaturbekannt (siehe beispielsweise US-PS 3 264 536, GB-PS 1 264 900, EP-A 0 038 028).

Das Polyethersulfonharz besitzt in allgemeinen eine Grundstruktur, die aus wiederkehrenden Einheiten der Formel (I)

$$-[-O-Z-O-W-]- \quad (I)$$

besteht.

Darin bedeuten:

Z den Rest eines zweiwertigen Phenols und

W den Rest einer benzoiden Verbindung mit einer inerten, elektronenanziehenden Gruppe,

wobei beide Reste durch aromatische Kohlenstoffatome über Valenzbindungen mit den Ethersauerstoffatomen verbunden sind und mindestens einer der Reste Z und/oder W eine Sulfongruppe zwischen aromatischen Kohlenstoffatomen enthält. Solche Polyethersulfone gehören zu den in der US-PS 3 264 536 beschriebenen Polyarylen-polyetherharzen.

Bevorzugte Diphenole für die Herstellung der aromatischen Polyethersulfone (A) sind Verbindungen der Formel (II)

$$HO-Z-OH \quad (II)$$

worin

Z einen zweiwertigen ein- oder mehrkernigen aromatischen Rest mit 6 bis 30 C-Atomen bedeutet, wobei die beiden OH-Gruppen direkt an je ein C-Atom eines aromatischen Systems gebunden sind.

Besonders bevorzugte Diphenole sind Verbindungen der Formel (III)

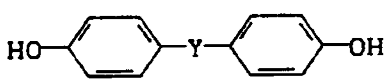

(III)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-,

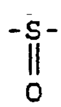

,

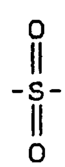

oder

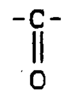

bedeutet,
sowie deren kernalkylierte und kernhalogenierte Derivate, z.B.
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α′-Bis-(hydroxyphenyl)diisopropylbenzole
sowie deren kernalkylierte und kernhalogenierte Derivate.

Die wichtigsten Diphenole sind: Bisphenol A, Tetramethylbisphenol A; 1,1-Bis-(4-hydroxyphenyl)-isobutan, 1,1-Bis-(4-hydroxyphenyl)cyclohexan; 4,4′-Dihydroxydiphenylsulfid; 4,4′-Dihydroxydiphenylsulfon sowie deren di- und tetrahalogenierte, bevorzugt chlorierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

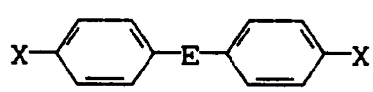 (IV)

Darin bedeuten X Halogen wie F, Cl, Br, I und E elektronenanziehende Gruppen, wie Sulfon-, Carbonyl-, Vinyl-, Sulfoxid- oder Azogruppen. Jeder der beiden Benzolkerne kann zusätzlich einen oder mehrere Reste gesättigter Kohlenwasserstoffe oder elektronenanziehender Verbindungen als Substituenten tragen. Bevorzugte Dihalogenverbindungen sind 4,4′-Dichlordiphenylsulfon und 4,4′-Dichlorbenzophenon.

Die Polyethersulfone (A) können auch in an sich bekannter Weise verzweigt sein durch Einbau mehrfunktioneller Monomerer. Geeignete Verzweigungsmittel sind die für die Herstellung von aromatischen Polyestern und für die Herstellung von aromatischen Polyestercarbonaten bekannten (siehe insbesondere Seiten 9 und 10 der DE-OS 2 940 024 und Seite 9 der DE-OS 3 007 934).

Das Molekulargewicht der Polyethersulfone (A) kann durch Kettenabbrecher, d.h. Einbau monofunktioneller Verbindungen geregelt werden.

Als solche Kettenabbrecher für die Polyethersulfone (A) werden vorzugsweise Phenol, Alkylphenole mit $C_1$-$C_{12}$-Alkylgruppen und halogenierte Phenole sowie Bromide und Chloride von $C_1$-$C_{10}$-Alkanen in Mengen von 0,1 bis 10 Mol-% (im Falle von Phenolen bezogen auf Diphenole, im Falle von Chloriden bezogen auf die aromatische Dihalogen-Verbindungen) verwendet.

Die reduzierten Viskositäten ($\eta_{red}$) der aromatischen Polyethersulfone (A) sind 0,15 bis 1,5 dl/g, vorzugsweise 0,35 bis 0,65 dl/g (gemessen an Lösungen von 20 mg Polyethersulfon (A) in 10 ml $CHCl_3$ bei 25°C).

Hydrierte Nitrilkautschuke (B) im Sinne der Erfindung sind Produkte, die durch Hydrieren statistischer Copolymerisate bevorzugt aus 90 bis 45 Gew.-%, besonders bevorzugt 85 bis 50 Gew.-%, insbesondere 82 bis 52 Gew.-% zumindest eines konjugierten Diens 10 bis 55 Gew.-%, bevorzugt 15 bis 50 Gew.-%, insbesondere 18 bis 48 Gew.-% zumindest eines ungesättigten Nitrils und 0 bis 10 Gew.-%, bevorzugt 0 bis 8 Gew.-% zumindest eines weiteren mit konjugierten Dienen und ungesättigten Nitrilen copolymerisierbaren Monomeren, erhalten wurden.

Als konjugierte Diene kommen bevorzugt Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten, Acryl- und Methacrylsäureester mit 1 bis 12 Kohlenstoffatomen in der Alkoholkomponente, α,ß-ungesättigte Mono- oder Dicarbonsäuren in Betracht.

Als beispielhaft sind zu nennen: für die Vinylaromaten Styrol, substituierte Styrole wie o-, m-, p-Methylstyrol, Ethylstyrol, ferner Vinylnaphthalin, Vinylpyridin, für die Acrylsäureester Methylacrylat, Ethylacrylat, n-Butylacrylat, tert.-Butylacrylat, 2-Ethylhexylacrylat, 2-Hydroxypropylacrylat, für die Methacrylsäureester: Methylmethacrylat, Ethylmethacrylat, n-Butylmethacrylat, t-Butylmethacrylat, 2-Ethylhexylmethacrylat, 2-Hydroxypropylmethacrylat, für die ungesättigten Carbonsäuren α,ß-ungesättigte Monocarbonsäuren mit 3 bis 5 Kohlenstoffatomen, wie Acrylsäure, Methacrylsäure und Crotonsäure sowie α,ß-ungesättigte Dicarbonsäuren mit 4 bis 5 Kohlenstoffatomen, wie Malein-, Fumar-, Citracon- und Itaconsäure, ferner die Halbester der α,ß-ungesättigten Dicarbonsäuren wie Maleinsäure-n-dodecylhalbester oder Fumarsäure-n-butylhalbester.

Als andere copolymerisierbare Verbindungen kommen in Betracht: Vinylchlorid, Vinylidenchlorid, N-Methylolacrylamid, Vinylalkylether mit 1 bis 4 Kohlenstoffatomen in der Alkylgruppe, Vinylester von Carbonsäuren mit 1 bis 18 Kohlenstoffatomen, wie Vinylacetat oder Vinylstearat.

Spezielle Beispiele für zu hydrierende Copolymerisate sind Acrylnitril-Isopren-Copolymerisate, Acrylnitril-Isopren-Butadien-Terpolymerisate, Acrylnitril-Isopren-n-Butylacrylat-Terpolymerisate, Acrylnitril-Butadien-Methylacylat-Terpolymerisate, Acrylnitril-Butadien-n-Butylacrylat-Terpolymerisate, Acrylnitril-Budadien-2-Hydroxypropylmethacrylat-Terpolymerisate, Acrylnitril-Butadien-Methacrylsäure-Terpolymerisate. Acrylnitril-Butadien-Copolymerisate sind besonders bevorzugt.

Verfahren zur Hydrierung dieser Produkte unter Bildung hydrierter Nitrilkautschuke (unter Erhalt der Nitrilgruppen) sind bekannt.

Der Hydriergrad der Polymeren (B) (Prozentsatz der hydrierten C-C-Doppelbindungen bezogen auf die Gesamtzahl der ursprünglich im Polymer vorhandenen C-C-Doppelbindungen) wird IR- oder NMR-spektroskopisch bestimmt und beträgt wenigstens 80 %, vorzugsweise wenigstens 90 %, insbesondere wenigstens 95 %.

Die hydrierten Polymeren (B) sind gelfrei und in Ketonen, wie Aceton und Butanon, in Ethern, wie Tetrahydrofuran oder Dioxan oder in chlorierten Kohlenwasserstoffen, wie Dichlormethan oder Chlorbenzol, löslich.

Die erfindungsgemäßen Formmassen können übliche Additive, wie beispielsweise Gleit- und Entformungsmittel, Nucleierungsmittel, Stabilisatoren, Füll- und Verstärkungsstoffe, Flammschutzmittel sowie Farbstoffe enthalten. Weiterhin ist es möglich, den erfindungsgemäßen Formmassen thermoplastische Harzkomponenten, z.B. Homo- oder Copolymerisate auf Basis von (substituiertem) Styrol (beispielsweise Styrol/Acrylnitril-Copolymere, α-Methylstyrol/Acrylnitril-Copolymere) oder Methylmethacrylat (beispielsweise Polymethylmethacrylat), Polyphenylenether auf Basis von 2,6-Dimethylphenol bzw. deren Gemische mit schlagzäh modifiziertem Polystyrol (HIPS), Polycarbonate, z.B. auf Basis von Bisphenol A, oder Pfropfkautschuke, vorzugsweise auf Basis von gesättigten Kautschuken wie z.B. Ethylen/Propylen(Dien)-Kautschuk (EP(D)M-Kautschuk), Polybutylacrylat- oder Polysiloxan-Kautschuk mit z.B. Styrol, α-Methylstyrol, kernsubstituiertem Styrol, Methylmethacrylat, Acrylnitril, Maleinsäureanhydrid, N-substituiertem Maleinimid, Vinylacetat oder Mischungen daraus als Monomeren zum Aufbau der Pfropfhülle, zuzumischen.

Die Formmassen können in üblichen Mischaggregaten, wie Walzen, Knetern, Ein- und Mehrwellenextrudern hergestellt werden.

Wenn auch in den meisten Fällen beide Komponenten zweckmäßigerweise in einem Schritt gemischt werden, kann es manchmal auch empfehlenswert sein, zuerst die zweite Komponente wegzulassen und erst zu einem späteren Zeitpunkt zuzumischen.

So können die erfindungsgemäßen Formmassen auf den genannten Mischaggregaten hergestellt werden, indem die beiden Komponenten (A) und (B) gemeinsam aufgeschmolzen und homogenisiert werden oder indem der hydrierte Nitrilkautschuk (B) in die Schmelze des Polyethersulfons (A) eingearbeitet wird.

Die Temperatur bei der Herstellung der Mischung sollte mindestens 10°C und zweckmäßig höchstens 80°C oberhalb des Schmelzpunktes des Polyethersulfons liegen.

Die erfindungsgemäßen Formmassen können zur Herstellung von Formteilen durch Spritzguß und Extrusion verwendet werden, insbesondere wo die beschriebenen Eigenschaften gefordert werden, z.B. für Außenteile von Kraftfahrzeugen.

Beispiele

Eingesetzte Polymerisate:

A) Aromatisches Polyethersulfon

1141,7 Teile Bis-2,2(4-hydroxyphenyl)propan und 1435,8 Teile Bis-(4-chlorphenyl)-sulfon werden unter Stickstoff in 4500 Teilen N-Methylpyrrolidon und 970 Teilen Chlorbenzol gelöst und mit 760 Teilen wasserfreiem Kaliumcarbonat versetzt. Das Reaktionsgemisch wird innerhalb von 30 Minuten auf 180°C erhitzt und dort für 5 Stunden gehalten, wobei ein Gemisch aus Wasser und Chlorbenzol abdestilliert. Innerhalb weiterer 4 Stunden wird das Chlorbenzol abdestilliert. Nach einer Reaktionszeit von 6 Stunden wird das Reaktionsgemisch auf 60 bis 70°C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25°C).

B) Hydrierter Nitrilkautschuk, erhalten nach der Vorschrift in DE-OS 3 329 974, Beispiel 1. Zur Hydrierung wurde ein statistisches Acrylnitril/Butadien-Copolymer mit 34,9 Gew.-% Acrylnitril und einer Mooney-Viskosität ML 1 + 4/100°C = 29 eingesetzt. Der Hydrierungsgrad betrug 99,7 % (infrarot-spektroskopisch bestimmt).

C) Pfropfkautschuk erhalten durch radikalische Polymerisation von 36 Gew.-Teilen Styrol und 14 Gew.-Teilen Acrylnitril in Gegenwart von 50 Gew.-Teilen eines Polybutadiens in Form eines Latex mit einem mittleren Teilchendurchmesser ($d_{50}$) von 400 nm.

Die Herstellung der erfindungsgemäßen Formmassen bzw. der Vergleichsmaterialien erfolgte in einem Innenkneter.

Die Spritzgießverarbeitung zu Prüfstäben und Plättchen erfolgte auf einer Spritzgußmaschine Arburg 350 bei 250°C.

Die Ermittlung der Prüfdaten erfolgte nach folgenden Normen:

| | |
|---|---|
| Kerbschlagzähigkeit $a_k$ (kJ/m²): | DIN 53 453 |
| Wärmeformbeständigkeit Vicat B (°C): | DIN 53 460 |
| Fließfähigkeit MVI (cm³/10 min): | DIN 53 735 |
| (gemessen bei 250° C/2,16 kg Belastung) | |

Die Beurteilung der Witterungsbeständigkeit erfolgte visuell an Plättchen nach Bewitterung in einem Gerät der Firma Atlas.

Die Zusammensetzungen der Formmassen sind in Tabelle 1 und die Prüfdaten in Tabelle 2 zusammengestellt.

Tabelle 1 Zusammensetzung der Formmassen

| Formmasse | A Gew.-Teile | B Gew.-Teile | C Gew.-Teile |
|---|---|---|---|
| 1 | 97,5 | 2,5 | - |
| 2 | 95 | 5,0 | - |
| 3 | 90 | 10,0 | - |
| 4 (Vergleich) | 100 | - | - |
| 5 (Vergleich | 97,5 | - | 2,5 |
| 6 (Vergleich) | 90 | - | 10,0 |

Tabelle 2 Prüfdaten der Formmassen

| Formmasse | $a_k$RT | $a_k$-40° C | Vicat B | MVI | Aussehen nach Bewitterung |
|---|---|---|---|---|---|
| 1 | 7,1 | 2,3 | 169 | 1,2 | unverändert |
| 2 | 16,4 | 6,3 | 162 | 2,1 | unverändert |
| 3 | 24,1 | 9,0 | 157 | 2,8 | leicht matt |
| 4 (Vergleich) | 4,3 | 2,1 | 179 | 0,3 | nicht geprüft |
| 5 (Vergleich) | 6,6 | 2,8 | 173 | 0,4 | leicht matt |
| 6 (Vergleich) | 10,5 | 4,8 | 162 | 0,8 | matt |

**Patentansprüche**

1. Thermoplastische Formmassen, aus A) 70 bis 99,5 Gew.-% eines thermoplastischen aromatischen Polyethersulfons oder Mischungen mehrerer thermoplastischer Polyethersulfone und B) 30 bis 0,5 Gew.-% eines hydrierten Nitrilkautschuks mit einem Hydrierungsgrad von mindestens 80%, der durch Hydrieren eines statistischen Copolymerisat erhalten würde.

2. Thermoplastische Formmassen, aus A) 75 bis 97,5 Gew.-% eines thermoplastischen aromatischen Polyethersulfons und B) 25 bis 2,5 Gew.-% eines hydrierten Nitrilkautschuks.

3. Thermoplastische Formmassen gemäß den Ansprüchen 1 und 2 worin das statistische Copolymerisat ein Butadien/Acrylnitril-Copolymerisat ist.

4. Thermoplastische Formmassen gemäß den Ansprüchen 1 und 2 worin das Polyethersulfon ein Polykondensationsprodukt aus Bis-2,2(hydroxyphenyl)propan und Bis-(4-chlorphenyl)-sulfon ist.

**Claims**

1. Thermoplastic moulding compounds of A) 70 to 99.5% by weight of a thermoplastic'aromatic polyether sulfone or mixtures of several thermoplastic polyether sulfones and B) 30 to 0.5% by weight of a hydrogenated nitrile rubber having a degree of hydrogenation of at least 80% which has been obtained by hydrogenation of a statistical copolymer.

2. Thermoplastic moulding compounds of A) 75 to 97.5% by weight of a thermoplastic aromatic polyether sulfone and B) 25 to 2.5% by weight of a hydrogenated nitrile rubber.

3. Thermoplastic moulding compounds as claimed in claims 1 and 2, in which the statistical copolymer is a butadiene/acrylonitrile copolymer.

4. Thermoplastic moulding compounds as claimed in claims 1 and 2, in which the polyether sulfone is a polycondensation product of bis-2,2-(hydroxyphenyl)-propane and bis-(4-chlorophenyl)-sulfone.

## Revendications

1. Matières à mouler thermoplastiques consistant en A) 70 à 99,5% en poids d'une polyéther-sulfone aromatique thermoplastique ou d'un mélange de plusieurs polyéther-sulfones thermoplastiques et B) 30 à 0,5% en poids d'un caoutchouc nitrile hydrogéné à un taux d'hydrogénation d'au moins 80%, qui a été obtenu par hydrogénation d'un copolymère statistique.

2. Matières à mouler thermoplastiques consistant en A) 75 à 97,5% en poids d'une polyéther-sulfone aromatique thermoplastique et B) 25 à 2,5% en poids d'un caoutchouc nitrile hydrogéné.

3. Matières à mouler thermoplastiques selon les revendications 1 et 2, dans lesquelles le copolymère statistique est un copolymère butadiène/acrylonitrile.

4. Matières à mouler thermoplastiques selon les revendications 1 et 2, dans lesquelles la polyéther-sulfone est un produit de polycondensation du bis-2,2-(hydroxyphényl)-propane et de la bis-(4-chlorophényl)-sulfone.